(19) Europäisches Patentamt
European Patent Office
Office européen des brevets

(11) **EP 0 976 543 A1**

(12) **EUROPEAN PATENT APPLICATION**

(43) Date of publication:
**02.02.2000 Bulletin 2000/05**

(51) Int. Cl.⁷: **B32B 27/08**, B32B 3/06,
B29C 65/02

(21) Application number: **99112737.4**

(22) Date of filing: **01.07.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **01.07.1998 JP 18593198**

(71) Applicant: **KURARAY CO., LTD.**
**Kurashiki-City Okayama Prefecture 710 (JP)**

(72) Inventor: **Kobayashi, Toshiaki**
**Okayama-Pref. (JP)**

(74) Representative:
**VOSSIUS & PARTNER**
**Siebertstrasse 4**
**81675 München (DE)**

(54) **Laminate and method of bonding it to a substrate**

(57)     Provided are a laminate capable of being efficiently and firmly bonded to objects, and an efficient method of bonding the laminate to objects. The laminate comprises at least a layer X containing a thermosoftening substance (component A) and a layer Y containing a hardly thermosoftening substance (component B), wherein cracks are formed in the layer Y so that the component A softened under heat could bleed out through the cracks.

Fig. 1

1. Object Bonded
2. Layer Y
3. Layer X
4. Joint
5. Cracks
6. Cracked Area
7. Laminate

**Description**

The present invention relates to a laminate easy of bonding to objects to be bonded thereto, a joint comprising the laminate, and a method of bonding the laminate. The invention further relates to construction members comprising the laminate, and a method of efficiently forming, in the laminate, cracks effective for bonding the laminate to objects to be bonded thereto.

Films of thermosoftening resins, such as soft polyvinyl chloride (PVC) resins, urethane resins, ethylene-vinyl acetate copolymers, etc., have many applications for construction members (for roofs, etc.). In particular, laminate films of those resins having a surface layer of hardly thermosoftening resins such as fluorine-containing resins and the like are being widely used, in which the surface layer is for improving the durability of the laminate films, for example, for improving the weather resistance, the stain resistance, the abrasion resistance and other properties thereof.

In general, the size of laminates producible on an industrial scale is limited, as the apparatus and the process available for the production are limited. Therefore, a plurality of laminates produced shall be bonded to each other to give sheet members having a desired size. However, it is generally difficult to firmly joint two laminates through hot sealing or with an adhesive, and the jointing operation often requires much labor and takes a lot of time. The problem with laminate structures is that efficiently bonding a plurality of laminates is difficult.

For example, JP-A 9-88253 discloses a method of bonding a plurality of sheets with a pressure-sensitive adhesive; and JP-A 6-155668 discloses a method of bonding a plurality of sheets through hot sealing via a specific adhesive layer being put between them. However, as being complicated and expensive, these methods are not so good. In addition, they are not favorable to the combination of a thermosoftening resin and a hardly thermosoftening resin having a poor affinity to each other, since the two resins will be poorly bonded to each other by the methods. For these reasons, the methods disclosed are not practicable.

Fluorine-containing resins (especially polyvinyl fluoride resins) which are widely used for the surface layer of laminates have good properties of heat resistance, weather resistance and stain resistance, but their affinity to ordinary thermosoftening resins is low. Therefore it is substantially difficult to firmly bond two laminates, of which the surface layer is of such a fluorine-containing resin, with an adhesive, or to firmly bond them by melting one component of them. A plurality of laminates could be firmly bonded through plasma treatment. However, in a construction site plasma treatment requires a large-scale apparatus and much labor, and takes a lot of time.

Where laminates are bonded with their layers of a thermosoftening resin facing each other, the bonding could be firm. In that case, however, the resulting sheet structures shall have an area which is not coated with a fluorine-containing resin layer, and their durability will be poor.

Given that situation, a method of jointing laminates by machine sewing has been investigated. However, in a construction site sewing is often difficult. In addition, since the machine-sewed joint will leak air, water, etc., the structures will lose their capabilities as screen sheets. Other methods of jointing laminates have been investigated. One comprises aligning two laminates in parallel, without overlapping them, followed by jointing them via a hot-sealing sheet having been prepared separately; and another comprises bonding them after the surface layer of a fluorine-containing resin has been partly removed from the site at which they are bonded to each other. However, these two methods are still problematic in that they take a lot of time and their working efficiency is poor.

The object of the present invention is to provide a laminate easy of bonding to objects to be bonded thereto, and construction members comprising the laminate, and to provide a method of efficiently bonding the laminate, and a method of efficiently forming, in the laminate, cracks effective for bonding the laminate to objects to be bonded thereto.

Specifically, the invention provides the following:

(1) A laminate comprising at least a layer X that contains a thermosoftening substance (component A) and a layer Y that contains a hardly thermosoftening substance (component B), wherein cracks are formed in the layer Y so that the component A softened under heat could bleed out through the cracks;

(2) The laminate of (1), wherein the increase in the width of the cracks after heat treatment at 180°C is at least 105 %;

(3) The laminate of (1) or (2), wherein the cracks are formed in stripes or lattices;

(4) The laminate of any one of (1) to (3), wherein at least a fluorine-containing resin is used as the hardly thermosoftening substance (component B);

(5) The laminate of any one of (1) to (4), wherein the layer X comprises at least a fibrous fabric and a thermosoftening substance (component A);

(6) A joint comprising a laminate of at least a layer X that contains a thermosoftening substance (component A) and a layer Y that contains a hardly thermosoftening substance (component B), and an object as bonded to the laminate, in which the layer Y is contacted with the object in such a manner that the component A having bled out through cracks as formed in the layer Y is bonded to the object so as to integrate the laminate and the object in a body;

(7) A method of bonding an object to a laminate of at least a layer X that contains a thermosoftening substance (component A) and a layer Y that contains a hardly thermosoftening substance (component B), in which cracks are formed in the layer Y so that the component A softened under heat could bleed out through the cracks; the method comprising placing the object on the laminate with the layer Y facing the object, followed by heating them under pressure so as to melt and soften the component A and to make the thus-softened component A bleed out through the cracks of the layer Y whereby the bled-out component A is bonded to the object so as to integrate the laminate and the object in a body;

(8) A construction member comprising the laminate of any one of (1) to (5);

(9) A method of forming cracks in a laminate of at least a layer X that contains a thermosoftening substance (component A) and a layer Y that contains a hardly thermosoftening substance (component B), which comprises contacting the layer Y with a roller equipped with cutting edges followed by rolling the roller on the layer Y to thereby form cracks in the layer Y to such a degree that the component A softened under heat could bled out through the cracks.

Fig. 1 is a graphical view showing one preferred condition of the joint of the laminate of the invention to which an object is bonded.

Fig. 2A and Fig. 2B are a side view and a bottom view, respectively, of one preferred example of an apparatus to be used for forming cracks in the laminate of the invention.

The thermosoftening substance (component A) for use in the invention is not specifically defined. Preferably used are thermoplastic resins, including, for example, polyolefin based resins (polyethylene, polypropylene, etc.), polyvinyl chloride based resins, polystyrene based resins, acrylonitrile-butadiene-styrene (ABS) based resins, polymethyl methacrylate based resins, polyvinyl acetate based resins, ethylene-vinyl acetate based resuns, polyvinylidene chloride based resins, etc. Needless-to-say, two or more of those resins are employable for the component A , and the component A may optionally contain any additives of plasticizer, flame retardant, light stabilizer, etc. In view of the workability and the cost, at least polyvinyl chloride based resins, especially soft polyvinyl chloride based resins are preferred.

The component A is used for forming the layer X. It is not always necessary that the layer X is made from the component A only. Any other materials may be combined with the component A in forming the layer X, so far as the component A could act to bond the laminate to objects. Such additional materials may be mixed with the component A or may be laminated on the layer of the component A.

In view of the easy handling and the mechanical properties of the laminate, it is desirable that the layer X comprises at least a hard substance that may be selected from metals, fibrous fabrics and hard films, and a thermosoftening substance (component A). The hard substances have good mechanical properties. Therefore, even when the layer Y of the laminate in which the layer X contains such a hard substance is cracked, the laminate loses little its mechanical strength and could well maintain the durability. In particular, where a hard substance layer is laminated on the layer of the component A, it is hardly cracked with cutters and others. Therefore, it is desirable to form the hard substance layer in a desired site where the layer Y is cracked. In that case, cracking the layer Y may be attained to give intended cracks to the intended depth without any delicate control for it. In particular, a fibrous fabric is lightweight and elastic, and it is desirable to use at least such a fibrous fabric and a thermosoftening substance (component A) to form the layer X.

The fibrous fabric usable herein includes, for example, woven fabrics such as plain woven fabrics, leno woven fabrics, mock leno woven fabrics, etc.; knitted fabrics such as inlay raschel fabrics, etc.; non-woven fabrics such as wet-process non-woven fabrics, dry-process non-woven fabrics, etc. Of those, preferred are woven or knitted fabrics, as being easy to handle and having good mechanical properties. Especially preferred are plain woven fabrics, as well as warp-weft inlay raschel fabrics of which the isotropy in the tensile elongation is high.

In order to reduce the weight of the laminate and to ensure the mechanical properties and the elasticity thereof, it is desirable that the fibrous fabric to be in the layer X of the laminate has a unit weight of from 100 to 500 $g/m^2$ or so.

The form of the fibers constituting the fibrous fabric is not specifically defined. For example, the fibers may be in any form of continuance filaments, short fibers, spun yarns, tape yarns, slit yarns, etc. For woven or knitted fabrics, preferably used are filaments as having good mechanical properties, especially multi-filaments as having good elasticity and good adhesiveness to the component A. The total denier of the filaments preferably falls between 1 and 3000 d or so, more preferably between 3 and 2000 d or so.

The fibers constituting the fibrous fabric include, for example, natural fibers (of cotton, hemp, etc.), inorganic fibers (glass fibers, carbon fibers, metal fibers, etc.) and organic synthetic fibers. In view of the mechanical properties and the easy handling, preferred are organic synthetic fibers. Concretely mentioned are polyester based fibers (including complete aromatic polyester fibers), polyamide based fibers (nylon 6, nylon 66), polyolefin based fibers, polyvinyl chloride based fibers, polyvinyl alcohol based fibers, acetate based fibers, viscose rayon based fibers, etc. Needless-to-say, two or more those fibers may be combined to form the fabric for use in the invention; or sheath-core composite fibers, sea-island fibers, blended fibers and the like comprising two or more different components are also employable for forming the fabric. If desired, the fabric may optionally contain any additive of titanium oxide, kaolin, silica, barium sulfate, carbon black, pigment, antioxidant, UV absorbent, light stabilizer, etc.

In view of the cost, the mechanical properties and the weather resistance, preferred are polyester based fibers.

The layer X containing a fibrous fabric and a thermosoftening substance (component A) is easily formed, for example, by impregnating the component A into the fibrous fabric. Needless-to-say, a layer of the component A may be laminated on one or both surfaces of a fabric (this may contain the component A having been previously impregnated thereinto). For example, the fibrous fabric and the component A may be integrated into the layer X through topping, lamination, roll coating, knife coating, dipping or the like. In view of the workability, preferably employed is extrusion lamination. The total amount of the component A to be applied to the fabric may fall between 50 and 500 % by weight or so, but preferably between 100 and 300 % by weight or so. The unit weight of the layer X preferably falls between 100 and 2000 $g/m^2$ or so, more preferably between 300 and 1500 $g/m^2$ or so; and the thickness thereof preferably falls between 0.1 and 5 mm or so.

In the laminate of the invention for construction members, it is desirable that at least the layer X has flame retardancy. For this, flame-resistant polymers may be used for the layer X, or a flame retardant may be added to the layer X so as to further enhance the flame retardancy of the layer X. The flame retardant preferred for that purpose includes, for example, halogen-containing flame retardants, phosphorus-containing flame retardants, antimony-containing flame retardants (antimony trioxide, antimony pentoxide, etc.), inorganic hydrates, etc. The inorganic hydrates may be inorganic substances containing crystal water (coordinated water, anionic water, lattice water, zeolite water), etc. As preferred examples, mentioned are aluminium hydroxide, magnesium hydroxide, hydrotalcites, etc.

The amount of the flame retardant to be added may be varied, depending on the object. In view of the flame-resisting effect of the flame retardant used and of the mechanical properties of the laminate, it is desirable that the component A to be in the layer X contains at least 3 % by weight, more preferably from 5 to 50 % by weight of the flame retardant. The flame retardant may be comprised of a plurality of compounds; and the component A may additionally contain any other additives besides the flame retardant.

The hardly thermosoftening substance (component B) to form the layer Y may be a substance of which the flow point is higher than that of the thermosoftening substance (component A) to form the layer X. Therefore, the component B shall depend on the component A to be used with it. For example, the hardly thermosoftening substance of the component B includes thermosetting resins such as phenolic based resins, urea based resins, melamine based resins, alkyd based resins, unsaturated polyester based resins, epoxy based resins, diallyl phthalate based resins, urethane based resins, silicone based resins, etc.; thermoplastic based resins of which the flow point is higher than that of the resins for the component A, such as amide based resins, acetal based resins, carbonate based resins, modified phenylene ether based resins, butylene terephthalate based resins, polyethylene terephthalate based resins, ultra-high-molecular polyethylene based resins, polyphenylene sulfide based resins, polysulfone based resins, polyether sulfone based resins, polyether-ether ketone based resins, polyarylate based resins (thermotropic liquid crystaline resins, etc.), polyamidimide based resins, polyetherimide based resins, fluorine-containing resins, etc.; and also metals such as typically aluminium, etc. Needless-to-say, two or more those substances may be used, to form the layer Y, and they may be mixed or may be in the form of individual layers to be laminated into the layer Y. Without interfering with the effect of the invention, any other components besides the hardly thermosoftening substance may be in the layer Y.

Above all, fluorine-containing resins are preferred for the component B, as having excellent properties of water-repelling ability, stain resistance, abrasion resistance, etc. It is desirable that at least 30 % by weight, more preferably at least 50 % by weight, even more preferably at least 80 % by weight of the layer Y is of a fluorine-containing resin.

Preferred examples of fluorine-containing resins for use in the invention include polyvinylidene fluoride resins, polyvinyl fluoride based resins, tetrafluoroethylene based resins, polyethylene-tetrafluoroethylene based resins, polychlorotrifluoroethylene based resins, polyethylene-chlorotrifluoroethylene based resins, polyperfluoroalkoxy based resins, polyperfluoroethylene-propylene based resins, polychlorotrifluoroethylene-vinylidenfluoride based resins, etc. Of those, especially preferred are polyvinyl fluoride resins, as being relatively lightweight (specific gravity: about 1.38 or so) and inexpensive and having good properties of stain resistance, etc.

The invention is significantly effective for the case where the component A and the component B have a poor affinity to each other, especially for the case where the difference in Solubility Parameter (SP) between the component A and the component B is at least 1, particularly at least 2. Therefore, the effect of the invention is remarkable when the component B is of a fluorine-containing resin, especially a polyvinyl fluoride based resin having a poor affinity to many thermosoftening resins, and is more remarkable when the component A is of a polyvinyl chloride based resin and the component B is of a fluorine-containing resin. As having good properties of water-repelling ability, stain resistance and abrasion resistance, fluorine-containing resins are favorable to surface layer materials and are widely used in the art. However, the adhesiveness of fluorine-containing resins to many thermosoftening resins is extremely low, and there exists a serious problem in interlayer bonding of fluorine-containing resins to thermosoftening resins. Present invention solves this problem. From the viewpoint of the two layers X and Y, in the invention, it is desirable that the difference in SP between the component A and the component B is at most 5.

SP as referred to herein is a parameter well known in the art, which is a solubility parameter of a substance to be calculated from the constituent atomic groups of the substance. For example, it may be calculated according to the method as proposed by Small and described in "Plasticizers - Theory and Applications" (edited by K. Murai and published by Miyuki Publishing on Mar. 1, 1973), pp. 15-16.

In view of the adhesiveness between the two substances for use in the invention, it is desirable that the flow point of the thermosoftening substance is lower than that of the hardly thermosoftening substance by at least 20°C, more preferably at least 50°C, even more preferably at least 80°C. In view of the adhesiveness, the dimension stability and the heat resistance, it is desirable that the flow point of the hardly thermosoftening substance is not lower than 150°C, more preferably not lower than 180°C, even more preferably not lower than 200°C, and that the flow point of the thermosoftening substance is lower than 150°C, more preferably between 80°C and 140°C. The flow point is measured according to the method described in Examples to follow hereinunder.

Where the component A or B is composed of plural constituents, the SP value and the flow point of the constituent that will have the greatest influence on the properties and the adhesiveness of the layer X or Y shall be investigated.

The laminate of the invention may have a three-layered structure in which the layer Y is laminated on the both surfaces of the layer X. In the laminate of that type, if desired, cracks may be formed in both outer surfaces of the layers Y.

In view of the adhesiveness and the durability of the laminate, it is desirable that the unit weight of the layer Y to be laminated on the layer X falls between 5 and 100 g/m$^2$ or so, more preferably between 10 and 50 g/m$^2$ or so, and that the thickness thereof falls between 1 μm and 3 mm or so, more preferably between 10 and 100 μm or so.

The ratio by weight of the layer X to the layer Y to be laminated on one surface of the layer X is not specifically defined, but, in view of the easy handling and the mechanical properties of the layers, it preferably falls between 100:1 and 1:1 or so, more preferably between 100:1 and 10:1 or so. Where the layer Y is laminated on both surfaces of the layer X, it is desirable that the ratio by weight of the layer X to the two layers Y falls between 100:2 and 1:2 or so, more preferably between 100:2 and 10:2 or so.

The method of laminating the layer that contains a thermosoftening substance (component A) and the layer that contains a hardly thermosoftening substance (component B) is not specifically defined. For example, an adhesive layer may be provided on the layer X and/or on the layer Y, if desired. Where a laminate previously prepared is bonded to an object via an adhesive therebetween, an additional step of forming an adhesive layer on any of the laminate or the object and even another additional step of bonding the two are needed, for which a large-scale apparatus is needed. The bonding operation will be expensive, requiring much labor and taking a lot of time. However, if an adhesive is applied to any of the constituent layers for the laminate being produced, the process of preparing the constituent layers could be efficiently combined with the process of laminating the layers into the intended laminate. The combined process attains efficient lamination of the constituent layers into the intended laminate, having a few negative influences on the labor, the time and the cost for the lamination.

For example, where the component A for the layer X is of a soft polyvinyl chloride and the component B for the layer Y is of a polyvinyl fluoride, an acrylic based resin or the like is favorably used as the adhesive for the two layers. In that case, a filmy layer of the adhesive having a unit weight of from 5 to 50 g/m$^2$ may be formed on any one of the constituent layers, and the constituent layers may be more efficiently laminated via the adhesive into the intended laminate.

Where the adhesiveness of the constituent layers is low, it is desirable that the layers is subjected to adhesiveness improving treatment of, for example, plasma processing, corona discharging or the like, prior to being laminated. The pre-treatment may be efficiently incorporated into the process of producing the laminate, as in the case noted above, and therefore can be attained relatively easily. However, where a laminate previously prepared is bonded to an object through such pre-treatment, an additional, large-scale apparatus is needed for the pre-treatment. The pre-treatment will be expensive, requiring much labor and taking a lot of time. Moreover in a constriction site bonding is very difficult. Therefore, for efficiently and firmly bonding the laminate to an object, the technique of the invention is indispensable.

The total thickness of the laminate of the invention is not specifically defined, but is preferably at least 0.05 mm in view of the mechanical properties of the laminate. The unit weight of the laminate is preferably at most 1500 g/m$^2$, more preferably from 200 g/m$^2$ to 1200 g/m$^2$, in view of the easy handling thereof.

The invention is characterized in that cracks are formed in the layer Y in such a manner that the component A softened or melted under heat could bleed out through the cracks. In the laminate having such cracks, the component A could bleed out when the laminate is heated under pressure. In that condition, the laminate could be efficiently and firmly bonded to an object under heat and pressure, and the bonding between the two is significantly enhanced.

The depth of the cracks is not specifically defined, provided that the cracks reach the component A existing in the layer X. Preferably, however, the cracks are so formed that the strength of the laminate is not lowered by the them. In view of the mechanical properties of the laminate, it is desirable that the depth of the cracks is at most 50 % or so, more preferably at most 30 % or so of the total thickness of the laminate. In the laminate where the layer X is a hard substance layer (especially, a fibrous fabric layer) containing the component A and where the layer X and the layer Y are so configured that the component A exists between the hard substance layer and the layer Y, cracks having a desired depth can be formed efficiently without interfering with the mechanical properties of the laminate. Therefore, the laminate of that type produces better results.

The shape of the cracks is not specifically defined. For example, the cracks may have a discontinuous form of broken notches, circles, squares, triangles, etc.; or may have a linear form of waves, straight lines, etc. For attaining uniform and good adhesion, it is desirable that the cracks have a linear form.

The width of the cracks is not also specifically defined. In view of the adhesiveness of the laminate and of the easy operation of forming the cracks, it is desirable that the width of the cracks falls between 0.01 mm and 1 mm, more preferably between 0.02 mm and 0.5 mm. The length of one crack may be discontinuous (that is, one crack may have a predetermined length). However, in view of the adhesiveness of the laminate, it is desirable that the length of one crack is at least 5 mm, more preferably at least 10 mm, even more preferably at least 20 mm. Most preferably, the cracks are substantially endless.

Needless-to-say, it is not always necessary that the cracks in one laminate are all uniform in their width and length. As the case may be, the width and the length of the cracks may be varied in different sites of one laminate. The width of the crack indicates the diameter of the largest inscribed circle of the crack; and the length thereof indicates the largest diameter of the crack. Where the crack is in the form of a true circle, its width shall be the same as its length.

For the same reasons as above, it is also desirable that the cracks are in stripes or lattices, especially preferably in lattices. For example, many circular or other discontinuous cracks may be formed in stripes or lattices. For better adhesion, however, it is more desirable that substantially linear cracks are formed in stripes or lattices. From the viewpoint of adhesiveness, it is desirable to form linear cracks at intervals of from 1 to 10 mm or so, more preferably from 1 to 8 mm or so.

For much better adhesion, it is more desirable to form cracks in lattices. Concretely, one preferred embodiment is to form latticed cracks in the lengthwise direction of the laminate and in the direction perpendicular to the lengthwise direction of the laminate (that is, in the widthwise direction of the laminate). More preferably, the neighboring sides of each lattice of one crack has nearly the same length. Needless-to-say, linear or discontinuous cracks may be additionally formed in the other part of the latticed cracks, and the shape and the density of the cracks may vary in different sites.

It is not always necessary that the cracks are formed in the entire surface of the laminate, but may be formed only in the site necessary for bonding, for example, only around the edge of the laminate. The part in which the cracks are to be formed may be varied, depending on the thickness and the adhesiveness of the laminate. For example, the cracks may be formed in the part falling between 1 cm and 30 cm or so from the edge of the laminate. In view of the mechanical properties and the durability of the laminate, it is desirable that the cracks are formed substantially in the necessary part only.

From the viewpoint of the adhesiveness, it is desirable that the increase in the width of the cracks after heat treatment at 180°C is at least 105 %, more preferably at least 150 %, even more preferably at least 200 %, still more preferably at least 300 %, further more preferably at least 500 %. Satisfying the preferred range of the width increase, cracks having a small width in the original condition may be formed in the layer Y, and their width could be enlarged while the laminate is heated with the result that the thermosoftening resin in the layer X could readily bleed out through the thus-enlarged cracks in a broad range to ensure firm bonding of the laminate to an object.

For firmly bonding the laminate to an object, the cracks in the layer Y must be so wide that the component A could bleed out of the surface of the laminate. However, forming the cracks having such a large width in the original condition requires much labor. Contrary to such wide ones, cracks having a small width in the original condition could be formed easily with a knife or the like and, in addition, their influences on the mechanical and other properties of the laminate could be negligible. Even though the cracks have a small width in the original condition, their width could be enlarged while the laminate is heated for its bonding to an object. Therefore, the component A could easily bleed out through the thus-enlarged cracks to ensure efficient and firm bonding of the laminate. From the viewpoint of the dimensional stability of the laminate, the increase in the width of the cracks is preferably at most 1000 %.

The increase in the width of the cracks as referred to herein is a value to be represented by $L1/L \times 100$, in which L indicates the width of a crack as formed in a laminate (precisely, it indicates the diameter of the largest inscribed circle of the crack), and L1 indicates the width of the same crack after heat treatment of the laminate at 180°C for 10 minutes (precisely, it indicates the diameter of the largest inscribed circle of the crack after the heat treatment). The increase in the width of the cracks could be controlled, depending on the degree of thermal shrinkage of the substances constituting the layer X and the layer Y, the affinity of the layers X and Y to each other, the size and the form of each crack, and the spacing between the cracks. It is desirable that the crack width after the heat treatment at 180°C for 10 minutes falls between 10 µm and 20 mm or so, more preferably between 1 and 10 mm or so.

For forming laminates having a large degree of crack width increase, it is desirable that the degree of thermal shrinkage of the layer Y is at least 1.01 times, more preferably at least 1.10 times, even more preferably at least 1.15 times, still more preferably at least 1.20 times that of the layer X. For the same reason, it is also desirable that the degree of thermal shrinkage of the layer Y is at least 1 %, more preferably at least 1.5 %, but is at most 5%, more preferably at most 3 % in view of the dimensional stability of the laminate.

Where the layer X contains a hard substance having a small degree of thermal shrinkage, for example, a fibrous fabric, the degree of thermal shrinkage of the layer X could be small even though the degree of thermal shrinkage of the component A in the layer X is large. Therefore, the layer X of that type is preferred for enlarging the increase in the width of the cracks in the layer Y. In particular, when the component A in the layer X has a large degree of thermal shrinkage, the dimensional stability of the layer X under heat and pressure could be ensured by the fibrous fabric or the like in the layer X and, in addition, the component A having shrunk under heat and pressure could readily bleed out through the cracks, thereby augmenting better bonding of the laminate to an object. In the layer X containing a fibrous fabric and therefore having a lowered degree of thermal shrinkage, it is desirable that the degree of thermal shrinkage of the component A is at least 3 %, more preferably between 5 and 20 % or so. The degree of thermal shrinkage may be measured according to the method described in Examples to follow hereinunder.

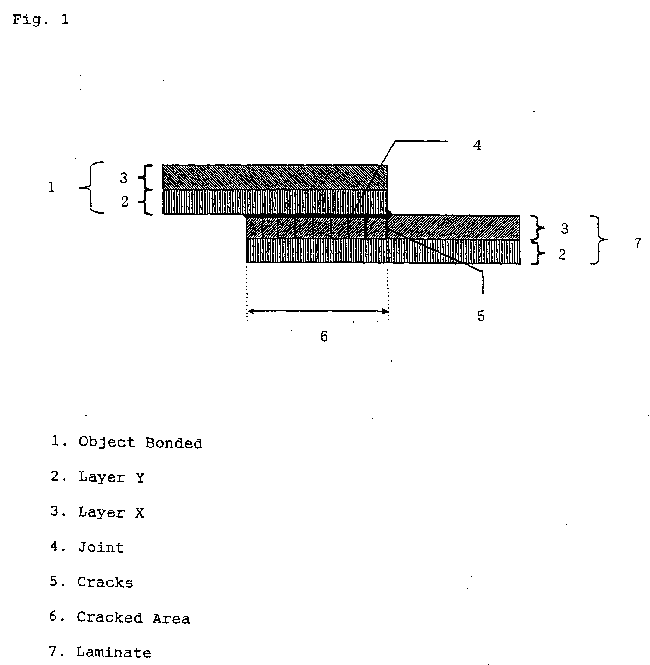

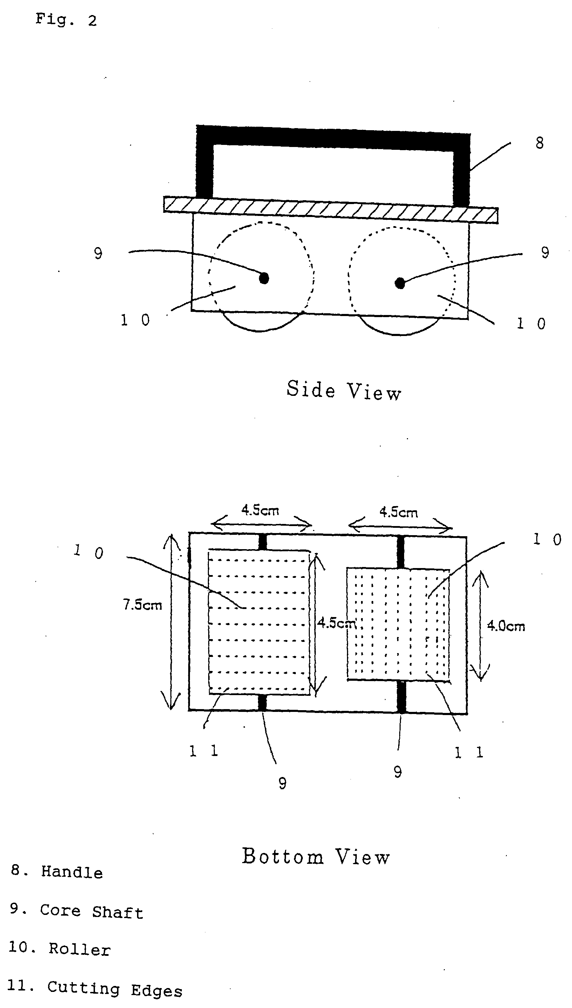

The method of forming the cracks in the layer Y is not specifically defined. For example, employable are grinding devices (for example, with abrasive paper, abrasive cloth, buffing leather, sand-blaster, grinding roll, etc.), edged tools such as cutters, needles, etc. For efficiently forming a large number of cracks, it is desirable to use a roller equipped with many cutting edges in stripes. The roller of that type is rolled on a laminate so as to form desired cracks on the laminate. A plurality of rollers each equipped with many cutting edges may also be used. For example, as in Fig. 2A and Fig. 2B, a device equipped with a plurality of rollers having different crack-forming patterns on their surface is used. The device illustrated is preferred, as efficiently forming desired cracks in the layer Y of the laminate of the invention.

The edged tools as referred to herein are not specifically defined, provided that they can form cracks in the laminate. For example, they include cutters, needles, crack-forming sharp projections.

It is not always necessary to previously form cracks in the laminate. The laminate may be worked in site to form cracks in the necessary area therein, just before being bonded to an object. In the in site field working, the laminate could be bonded to a desired object in a simplified manner, and the in-situ crack forming is extremely good.

The method of heating the laminate of the invention for bonding it to an object is not specifically defined. For efficient bonding operation, the laminate is preferably subjected to hot air welder (for example, with Leister of KARLLEISTER LTD.) or high-frequency welder treatment. For the high-frequency welder treatment, for example, used is a general-purpose high-frequency welder for frequency of from 40 to 50 MHz. In the heat treatment process using the high-frequency welder, the contact pressure may be at least 1 kgf/m$^2$, the anode current may fall between 30 and 200 A/m$^2$, and the charging time may fall between 3 and 15 seconds. After the laminate has been hot-sealed with an object in that condition, this is cooled under the same contact pressure for 2 to 10 seconds. Even though the component A is a resin not melting in the high-frequency welder, its weldability in high-frequency heating could be improved by adding an inorganic hydrate of, for example, aluminium hydroxide, magnesium hydroxide, hydrotalcite compounds and the like to the component A. As the case may be, therefore, it is desirable to add such an inorganic hydrate to the component A. The amount of the inorganic hydrate to be added preferably falls between 1 and 70 % by weight, more preferably between 3 and 40 % by weight of the component A.

The object to be bonded to the laminate of the invention is not specifically defined, including, for example, films (single-layered films, laminated films), tarpaulins, etc. In view of the adhesiveness between them, however, at least the surface of the object, on which the laminate of the invention is bonded to the object, contains a component having a high affinity to the component A in the laminate. Concretely, it is desirable that the difference in SP between the component in that surface of the object and the component A in the laminate is at most 0.8, more preferably at most 0.5.

For better results, the object to which the laminate of the invention is bonded is a laminate of the same type comprising at least the layer X and the layer Y whether it has cracks in the layer Y or not. It is not always necessary that the component A and the component B in two laminates, one being the laminate of the invention and the other being the bonding object, are the same ones. Preferably, however, the affinity between the component A in the laminate of the invention and that in the laminate of the bonding object is high. More preferably, the component A in two laminates is of the same type.

For their better adhesion, two laminates are preferably so bonded to each other that the cracked surface of the laminate of the invention is contacted with the component A in the laminate of the bonding object. In that condition, the layer X does not substantially exist on one surface of the bonded sheet. The bonded sheet could have the advantage of durability and stain resistance (see Fig. 1).

The joint width may be determined freely, depending on the object. As the case may be, the joint may cover substantially the entire surface of the laminate. In general, however, the joint width falls between 1 cm and 1 m or so in ordinary applications.

It is desirable that the tensile strength and the peeling strength of the joint part in the invention is at least 50 %, more preferably at least 70 % of the tensile strength and the peeling strength of the joint part in an ordinary case where two laminates are bonded at the layer X of the two.

The laminate of the invention has many applications, but is especially favorable to waterproof members (especially construction members). It is favorable to hood sheets for trucks, sheets for weather-beaten substances, liners, tents (tented storehouses, etc.), pond liners, sheets for civil engineering, sheets for shut-off water, liners for water storage tanks, etc. Above all, the laminate is significantly effective, when used in construction members, especially in members for roofs.

The invention is described in more detail with reference to the following Examples, which, however, are not intended to restrict the scope of the invention.

The physical data of samples produced herein were measured according to the methods mentioned below. flow Point (°C):

To a sample having been dried in vacuum at room temperature, applied is a load of 100 kg/cm$^2$. In that condition, the sample is heated in a temperature range of from 50°C to 300°C at a heating rate of 5°C/min, whereupon the flow point of the sample (at which the sample begins to flow) in that range is measured with a flow tester (Shimadzu Seisakusho's Overhead Flow Tester CFT-500C Model). In the tester, the piston ascends slightly owing to the thermal expansion of the sample being heated, and then descends. The temperature at which the piston begins to visually descend is recorded, which is the flow point of the sample.

Degree of Thermal Shrinkage (%):

A sample (10 cm $\times$ 10 cm) is left at 20°C and 65 % RH for 24 hours, and its size is measured ($S_1$ cm in length $\times$ $T_1$ cm in width). Next, this is kept in a drier at 150°C for 10 minutes, and its size is again measured ($S_2$ cm in length $\times$ $T_2$ cm in width). The degree of thermal shrinkage of the sample is represented by $\{(S_1 - S_2)/S_1 + (T_1 - T_2)/T_1\} \times 1/2 \times 100$ .

Solubility Parameter(SP):

SP is a solubility parameter of a substance to be calculated from the constituent atomic groups of the substance, as proposed by Small and described in "Plasticizers - Theory and Applications" (edited by K. Murai and published by Miyuki Publishing on Mar. 1, 1973), pp. 15-16. SP of a substance is represented by the following equation, based on the structural formula and the density of the substance (Small method).

$$\delta(SP) = d\Sigma G/M$$

where

d indicates the density of the substance,
G indicates the molecular gravitation constant of the atom or atomic group of substance,
$\Sigma G$ indicates the sum total of G of the atoms and the atomic groups in the molecule of the substance,
M indicates the molecular weight of the substance.

Increase in Width of Cracks (%):

The width L of one crack in a laminate sample is measured with a 0.01 mm-scale readable microscope. The sample is heated at 180°C for 10 minutes and then cooled to room temperature, and the width L1 of the crack in the laminate is measured. The increase in the width of the crack is represented by (L1/L) $\times$ 100 (%) . In one sample, at least 10 cracks are measured, and the data obtained are averaged. The average value indicates the increase in the width of the cracks in the sample. The width of the crack is the diameter of the largest inscribed circle of the crack.

Tensile Strength (kg/3 cm):

Measured according to the method stipulated in JIS L1096, 6.12 (1) (strip method).

Tensile Strength of Joint (kg/3 cm):

Measured according to the method stipulated in JIS L1096, 6.12(1) (strip method).

Peeling Strength of Joint (kg/2 cm):

Measured according to JIS L6328.

Creep Resistance of Joint:

Measured according to JIS K6859.

1) Laminate samples are kept in an atmosphere at 20°C, to which is applied a load of 1/4 of the tensile strength of each sample. The samples in which the joint did not break within 24 hours in that condition are good (O); and the others in which the joint broke are bad (X).

2) Laminate samples are kept in an atmosphere at 60°C, to which is applied a load of 1/10 of the tensile strength of each sample. The samples in which the joint did not break within 6 hours in that condition are good (O); and the others in which the joint broke are bad (X).

Reference Example 1:

A laminate sample composed of a layer X and a layer Y was produced herein. Precisely, both surfaces of a warp-weft inlay raschel fabric of polyester multi-filaments (1000 d/200 f) having a unit weight of 280 g/m$^2$ were coated with a component A, flame-retardant soft polyvinyl chloride resin (having a flow point of 114.4°C, a degree of thermal shrinkage of 10.5 %, and SP of 9.6, and containing 37 % by weight of a plasticizer DOP and 8.5 % by weight of antimony trioxide) to prepare a tarpaulin having a unit weight of 845 g/m$^2$. The amount of the resin applied was 220 % by weight relative to the weight of the fibers constituting the fabric. The tarpaulin prepared had a thickness of 0.7 mm. This is the layer X of the laminate. The degree of thermal shrinkage of the layer X was substantially 0 %.

One surface of the layer X was coated with an acrylic resin adhesive, DuPont's 68080. The unit weight of the adhesive applied was 25 g/m$^2$. Having been subjected to corona discharging treatment, a polyvinyl fluoride film from DuPont (having a flow point of 219.2°C, a degree of thermal shrinkage of 3 %, SP of 7.0, and a thickness of 25 μm) as the layer Y was laminated on that surface of the layer X via the adhesive. The layer Y had a unit weight of 25 g/m$^2$. The laminate thus produced had a unit weight of 895 g/m$^2$ (Kuraray's Large-Size Tent FV-E6200, C-type sheet).

Reference Example 2:

Another laminate sample composed of a layer X and a layer Y was produced. The layer X is of a soft polyvinyl chloride film having a thickness of 0.04 mm. The film had a flow point of 114.4°C, a degree of thermal shrinkage of 10.5 %, and SP of 9.6, and contained 37 % by weight of a plasticizer DOP. One surface of the layer X was coated with an acrylic resin adhesive, DuPont's 68080. The unit weight of the adhesive applied was 25 g/m$^2$. A polyester film (Toyobo's PET Film) of 0.04 mm thick was laminated, as the layer Y, on that surface of the layer X via the adhesive. The film had a flow point of 253°C, a degree of thermal shrinkage of 1.5 %, SP of 10.7. The laminate thus produced had a thickness of 0.47 mm.

Example 1:

Using a cutter knife, linear continuous cracks having a depth of about 0.1 mm were formed in the layer Y of the laminate that had been produced in Reference Example 1, in the area of 4 cm in width from the end of the laminate. The pitch of the cracks was 3 mm. The cracks were formed both in the lengthwise direction of the laminate and in the direction (widthwise direction) perpendicular to the lengthwise direction, and they were in lattices. The width of the cracks was about 0.05 mm, and the increase in the width of the cracks under heat at 180°C was 650 %.

Next, one end of an object, Kuraray's Large-Size Tent FV-E6200 (C-type sheet) was laid on the cracked laminate in such a manner that the polyvinyl chloride layer of the object was kept in contact with the cracked area of the laminate, and the two were hot-sealed with a high-frequency welder (67 A/m$^2$, 0.15kg/cm$^2$, 15 seconds). In that condition, the two laminates were bonded to each other (see Fig. 1). In the joint, the component A having bled out through the cracks in the layer Y of the laminate firmly bonded to the polyvinyl chloride layer of the object. The bonded laminate sheet was tested, and the test data obtained are shown in Table 1.

Example 2:

The same process as in Example 1 was repeated, except that linear cracks (3 mm pitch) were formed in two directions at 45°C and 135°C relative to the lengthwise direction of the laminate. The width of the cracks thus formed in lattices was about 0.05 mm, and the increase in the width of the cracks under heat at 180°C was 650 %.

This laminate was bonded to the same object in the same manner as in Example 1. In the joint, the component A having bled out through the cracks in the layer Y of the laminate firmly bonded to the polyvinyl chloride layer of the object. The bonded laminate sheet was tested, and the test data obtained are shown in Table 1.

Example 3:

Using a cutter knife, cracks were formed in the surface of the polyester film layer of the laminate that had been produced in Reference Example 2, in the same manner as in Example 1. The width of the cracks formed was about 0.05 mm, and the increase in the width of the cracks under heat at 180°C was 543 %.

Next, one end of an object (this is the laminate produced in Reference Example 2) was laid on the cracked laminate in such a manner that the polyvinyl chloride layer of the object was kept in contact with the cracked area of the laminate, and the two were bonded to each other through hot sealing in the same manner as in Example 1. In the joint, the component A having bled out through the cracks in the layer Y of the laminate firmly bonded to the polyvinyl chloride layer of the object. The bonded laminate sheet was tested, and the test data obtained are shown in Table 1.

Comparative Example 1:

The same process as in Example 1 was repeated, except that no cracks were formed in any one of two laminates. In this, however, the two laminates did not substantially bond together. The test data are in Table 1.

## Table 1

|  |  | Example 1 | Example 2 | Example 3 | Comparative Example 1 |
|---|---|---|---|---|---|
| Tensile Strength | | 295 | 295 | 63 | 295 |
| Joint | Tensile Strength | 252 | 223 | 35 | - |
| | Peeling Strength | 7.5 | 5.6 | 3.5 | - |
| | Creep Resistance at 20°C | O | O | O | X |
| | Creep Resistance at 60°C | O | O | O | X |

Example 4:

The same process as in Example 1 was repeated, except that the laminate was cracked with a crack-forming device of Fig. 2A and Fig. 2B (this device is equipped with two rollers having different cracking patterns, and the width of the cracks to be formed is about 0.05 mm, the pitch thereof is 4 mm and the depth thereof is 0.1 mm). Briefly, the two rollers in the device were rolled in the intended area of the layer Y of the laminate. Forming the cracks was easy and efficient. The adhesiveness of the thus-processed laminate was good, as in Example 1.

Examples 5 to 8:

The cracked laminates having been produced in Examples 1 to 4 were used as construction members. Briefly, each laminate was bonded to the same object in the same manner as in Example 1, thereby producing roofs for simple buildings. The bonding operation was simplified and efficient. In addition, the joint was firmly sealed, and had good properties of water-repelling ability and weather resistance. In particular, since the laminates of Examples 1, 2 and 4 were reinforced with a fabric and contained a fluorine-containing resin, the roofs incorporating any of those laminates had much better mechanical properties, weather resistance and flame retardancy. Above all, the joint in the samples of Examples 1 and 4 was better.

While the invention has been described in detail and with reference to specific embodiments thereof, it will be apparent to one skilled in the art that various changes and modifications can be made therein without departing from the spirit and scope thereof.

**Claims**

1. A laminate comprising at least a layer X that contains a thermosoftening substance (component A) and a layer Y that contains a hardly thermosoftening substance (component B), wherein cracks are formed in the layer Y so that the component A softened under heat could bleed out through the cracks.

2. The laminate as claimed in claim 1, wherein the increase in the width of the cracks after heat treatment at 180°C is at least 105 %.

3. The laminate as claimed in claim 1 or 2, wherein the cracks are formed in stripes or lattices.

4. The laminate as claimed in any one of claims 1 to 3, wherein at least a fluorine-containing resin is used as the hardly thermosoftening substance (component B).

5. The laminate as claimed in any one of claims 1 to 4, wherein the layer X comprises at least a fibrous fabric and a thermosoftening substance (component A).

6. A joint comprising a laminate of at least a layer X that contains a thermosoftening substance (component A) and a layer Y that contains a hardly thermosoftening substance (component B), and an object as bonded to the laminate, in which the layer Y is contacted with the object in such a manner that the component A having bled out through cracks as formed in the layer Y is bonded to the object so as to integrate the laminate and the object in a body.

7. A method of bonding an object to a laminate of at least a layer X that contains a thermosoftening substance (component A) and a layer Y that contains a hardly thermosoftening substance (component B), in which cracks are formed in the layer Y so that the component A softened under heat could bleed out through the cracks; the method comprising placing the object on the laminate with the layer Y facing the object, followed by heating them under pressure so as to melt and soften the component A and to make the thus-softened component A bleed out through the cracks of the layer Y whereby the bled-out component A is bonded to the object so as to integrate the laminate and the object in a body.

8. A construction member comprising the laminate of any one of claims 1 to 5.

9. A method of forming cracks in a laminate of at least a layer X that contains a thermosoftening substance (component A) and a layer Y that contains a hardly thermosoftening substance (component B), which comprises contacting the layer Y with a roller equipped with cutting edges followed by rolling the roller on the layer Y to thereby form cracks in the layer Y to such a degree that the component A softened under heat could bleed out through the cracks.

Fig. 1

1. Object Bonded

2. Layer Y

3. Layer X

4. Joint

5. Cracks

6. Cracked Area

7. Laminate

Fig. 2

Side View

Bottom View

8. Handle

9. Core Shaft

10. Roller

11. Cutting Edges

European Patent
Office

**EUROPEAN SEARCH REPORT**

Application Number

EP 99 11 2737

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 723 223 A (QUICK JAMES R) 3 March 1998 (1998-03-03) * column 2, line 28 - line 64 * --- | 6,7 | B32B27/08 B32B3/06 B29C65/02 |
| X | US 5 431 979 A (DELLINGER ALLAN M ET AL) 11 July 1995 (1995-07-11) * column 2, line 7 - line 45 * * claims 1,6 * --- | 1 | |
| A | DE 41 18 167 C (KEMPCHEN & CO. GMBH) 5 March 1992 (1992-03-05) * claims 1-8; figures 1-5 * --- | 1-8 | |
| A | EP 0 601 815 A (KUREHA CHEMICAL IND CO LTD) 15 June 1994 (1994-06-15) * page 2, line 12 - line 32 * * page 3, line 43 - line 51 * * page 4, line 12 - line 36 * * page 5, line 41 - page 6, line 14 * --- | 1-8 | |
| A | PATENT ABSTRACTS OF JAPAN vol. 009, no. 034 (M-357), 14 February 1985 (1985-02-14) & JP 59 176016 A (MARUYAMA KOGYO KK), 5 October 1984 (1984-10-05) * abstract * --- | 1-8 | TECHNICAL FIELDS SEARCHED (Int.Cl.7) B32B B29C F16B B61D B60J |
| A | US 4 943 473 A (SAHATJIAN RONALD A ET AL) 24 July 1990 (1990-07-24) * column 5, line 11 - column 6, line 3 * * examples 1-8 * --- | 1-8 | |
| A | DE 37 24 510 A (REIFENHAEUSER MASCH) 9 February 1989 (1989-02-09) * column 2, line 31 - line 62 * * figure 1 * ----- | 9 | |

The present search report has been drawn up for all claims

| Place of search | Date of completion of the search | Examiner |
|---|---|---|
| MUNICH | 8 December 1999 | Lindner, T |

EPO FORM 1503 03.82 (P04C01)

**ANNEX TO THE EUROPEAN SEARCH REPORT
ON EUROPEAN PATENT APPLICATION NO.**                        EP 99 11 2737

This annex lists the patent family members relating to the patent documents cited in the above-mentioned European search report.
The members are as contained in the European Patent Office EDP file on
The European Patent Office is in no way liable for these particulars which are merely given for the purpose of information.

08-12-1999

| Patent document cited in search report | | Publication date | Patent family member(s) | | Publication date |
|---|---|---|---|---|---|
| US 5723223 | A | 03-03-1998 | NONE | | |
| US 5431979 | A | 11-07-1995 | NONE | | |
| DE 4118167 | C | 05-03-1992 | NONE | | |
| EP 0601815 | A | 15-06-1994 | JP | 6170950 A | 21-06-1994 |
| | | | US | 5569524 A | 29-10-1996 |
| JP 59176016 | A | 05-10-1984 | NONE | | |
| US 4943473 | A | 24-07-1990 | DE | 3688000 A | 22-04-1993 |
| | | | DE | 3688000 T | 21-10-1993 |
| | | | EP | 0202996 A | 26-11-1986 |
| | | | JP | 2619362 B | 11-06-1997 |
| | | | JP | 62023751 A | 31-01-1987 |
| DE 3724510 | A | 09-02-1989 | NONE | | |

EPO FORM P0459

For more details about this annex : see Official Journal of the European Patent Office, No. 12/82